# EUROPEAN PATENT SPECIFICATION

(11) **EP 2 471 991 B1**
(45) Date of publication and mention of the grant of the patent: **30.05.2018**
(21) Application number: 11195588.6
(22) Date of filing: 23.12.2011
(51) Int. Cl.: D06F 39/02

(54) **Washing machine**
Waschmaschine
Machine à laver

(30) Priority: 04.01.2011 KR 20110000664
(43) Date of publication of application: 04.07.2012
(73) Proprietor: Samsung Electronics Co., Ltd., Suwon-si, Gyeonggi-do, 443-742 (KR)
(72) Inventor: Mun, Il Ju, Gyeonggi-do (KR); Yoon, Eung Yeoul, Gyeonggi-do (KR); Shin, Kyu Ho, Seoul (KR); Park, Kwang Hyok, Gyeonggi-do (KR)
(74) Representative: Grünecker Patent- und Rechtsanwälte PartG mbB

(56) References cited:
- EP-A1- 1 449 952
- EP-A2- 1 903 137
- WO-A1-03/044256

## Description

### BACKGROUND

### 1. Field

Embodiments relate to a washing machine having a detergent feeding device to feed detergent.

### 2. Description of the Related Art

Generally, a washing machine includes a water tub in which water is received, and a rotating tub rotatably installed in the water tub. As the rotating tub in which laundry is received is rotated within the water tub, washing of the laundry is carried out.

The washing machine is equipped with a detergent feeding device. In recent years, the detergent feeding device has been designed to feed detergent for use in washing of laundry into the water tub.

The detergent feeding device includes a detergent housing mounted in a main body of the washing machine and a detergent receiving case movably inserted in the detergent housing so as to protrude from the main body upon movement thereof. The detergent receiving case internally defines a detergent receiving region in which detergent is received.

As such, after the detergent receiving case is pulled out of the detergent housing to expose the detergent receiving region to the outside, the user may pour detergent into the detergent receiving region.

EP 1 449 952 A1 discloses a washing machine with a detergent distributor which comprises a housing and a drawer. Furthermore, there are ribs on both inner surfaces of the housing which are used for guiding rollers. First rollers on both sides of the drawer cooperate with the lower surface of the rib and other rollers cooperate with the upper surface of the rib.

### SUMMARY

It is an object of the present invention to provide a washing machine having a detergent feeding device to achieve more easy movement of a detergent receiving case.

Additional aspects of one or more embodiments will be set forth in part in the description which follows and, in part, will be apparent from the description, or may be learned by practice.

This object is solved by the features of claim 1. Advantageous embodiments are disclosed by the subclaims.

The auxiliary support member may include an auxiliary support roller supported in a rolling manner on the bottom surface of the detergent housing.

The auxiliary support member may include an auxiliary support portion integrally extending from the detergent receiving case.

The detergent receiving case may include a partition to divide the interior of the detergent receiving case into left and right regions, and a roller mount indented in the partition for installation of the support roller.

The detergent receiving case may further include a stopper located forward of the support roller, the stopper serving to limit a withdrawal distance of the detergent receiving case.

The partition may include elongated slits formed in an upper surface thereof at opposite sides of the stopper to extend in a front-and-rear direction thereof.

The detergent housing may include first rail portions provided at opposite inner surfaces of the detergent housing, to which the detergent receiving case is movably installed, and the detergent receiving case may include second rail portions provided at opposite outer surfaces thereof so as to be movably installed respective to the first rail portions.

The at least one support roller may include two support rollers, and roller mounts for installation of the two support rollers may be provided at opposite lateral positions of the detergent receiving case.

The detergent housing may include an inclined guide extending forwardly and upwardly from an inner bottom surface of the detergent housing so that the auxiliary support member is supported in contact with the inclined guide.

A lower end of the auxiliary support member to be supported in contact with the inclined guide may be curved.

### BRIEF DESCRIPTION OF THE DRAWINGS

These and/or other aspects of one or more embodiments will become apparent and more readily appreciated from the following description of embodiments, taken in conjunction with the accompanying drawings of which:
FIG. 1 is a schematic view of a washing machine according to an embodiment;
FIG. 2 is an exploded perspective view of a detergent feeding device usable with the washing machine according to an embodiment;
FIG. 3 is a perspective view illustrating a detergent receiving case installed in the washing machine according to an embodiment;
FIG. 4 is a side sectional view of the detergent feeding device usable with the washing machine according to an embodiment;
FIG. 5 is an enlarged view of an auxiliary support roller illustrated in FIG. 4;
FIG. 6 is a graph comparing force required to open or close the detergent receiving case between an embodiment and the related art;
FIG. 7 is a side view illustrating a support part usable with the washing machine according to another embodiment; and
FIG. 8 is a perspective view illustrating a support roller included in the washing machine to an embodiment.

### DETAILED DESCRIPTION

Reference will now be made in detail to an exemplary embodiment, examples of which are illustrated in the accompanying drawings, wherein like reference numerals refer to like elements throughout.

In the present embodiment, a drum washing machine, which realizes washing of laundry by rising and falling of laundry, will be described by way of example.

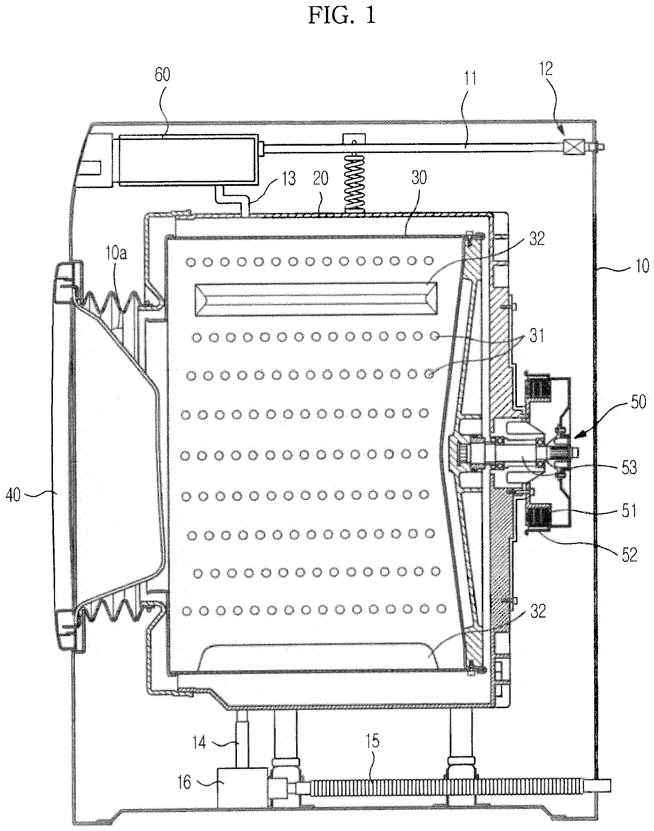

The washing machine according to an embodiment, as illustrated in FIG. 1, includes a main body 10 defining an external appearance thereof, a water tub 20 suspended in the main body 10, in which water is received, a rotating tub 30 rotatably installed in the water tub 20, a door 40 to open or close a laundry input opening 10a, and a drive motor 50 installed to a rear surface of the water tub 20 to generate rotational power required to rotate the rotating tub 30.

As such, as the rotating tub 30 is rotated by the drive motor 50 after the door 40 is opened to input laundry into the rotating tub 30 through the input opening 10a, laundry in the rotating tub 30 is raised and then falls repeatedly, whereby the laundry is washed.

The rotating tub 30 is provided with communication holes 31 for passage of water from the water tub 20 into the rotating tub 30. Lifters 32 to raise laundry are arranged at an inner surface of the rotating tub 30.

A water supply pipe 11 to supply water into the water tub 20, a water supply valve 12 to open or close the water supply pipe 11, a detergent feeding device 60 to add detergent in to the water supplied through the water supply pipe 11, and a water supply hose 13 connected between the detergent feeding device 60 and the water tub 20 to guide the water and detergent into the water tub 20, are arranged above the water tub 20. A drain pipe 14 and a drain hose 15 to discharge wash water to the outside after completion of washing of laundry, and a drain pump 16 placed between the drain pipe 14 and the drain hose 15, are arranged below the water tub 20.

The drive motor 50 includes a stator 51 installed to the water tub 20, a rotator 52 to be rotated by interaction with the stator 51, and a rotating shaft 53 having one end installed to the rotator 52 and the other end penetrating the rear surface of the water tub 20 to thereby be installed to the rotating tub 30, the rotating shaft 53 allowing the rotating tub 30 to be rotated along with the rotator 52.

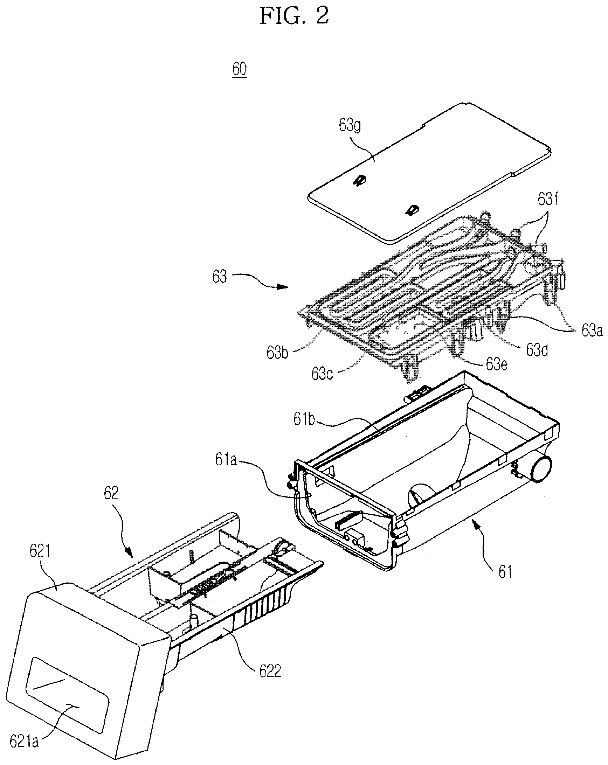

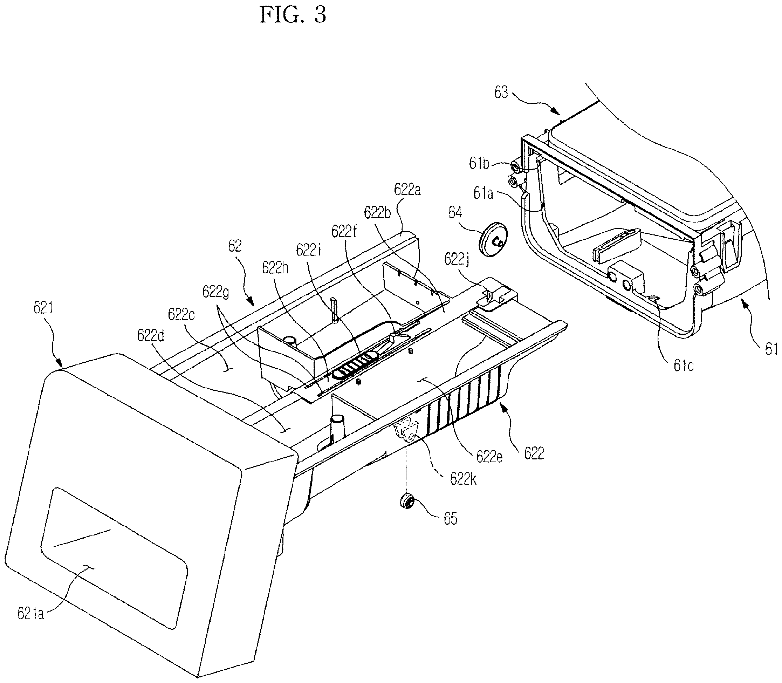

The detergent feeding device 60, as illustrated in FIGS. 2 and 3, includes a detergent housing 61 mounted in the main body 10, a detergent receiving case 62 movably accommodated in the detergent housing 61, the detergent receiving case 62 internally defining detergent receiving regions 622c, 622d and 622e, and a water supply guide unit 63 mounted on an upper end of the detergent housing 61 to supply water into detergent received in the detergent receiving case 62.

To movably install the detergent receiving case 62 to the detergent housing 61, the detergent housing 61 is provided at opposite inner lateral surfaces thereof with first rail portions 61b to which the detergent receiving case 62 is slidably installed, and the detergent receiving case 62 is provided at opposite lateral sides thereof with second rail portions 622a to be movably installed to the first rail portions 61b.

The detergent housing 61 is mounted stationarily in the main body 10. The front side of the detergent housing 61 is open to form an opening 61a, through which the detergent receiving case 62 is withdrawn or inserted in. The top of the detergent housing 61 is open for installation of the water supply guide unit 63.

The detergent receiving case 62 includes a front cover 621 defining a front surface of the detergent receiving case 62, and a tray 622 provided at the rear of the front cover 621 so as to be received in the detergent housing 61. The front cover 621 is provided with a grip recess 621a to assist the user to easily apply force to the detergent receiving case 62. The above-described detergent receiving regions 622c, 622d and 622e are defined in the tray 622. The interior of the tray 622 is divided into left and right regions by a front-and-rear extending partition 622b such that one region includes a main detergent receiving region 622c in which main detergent is received and the other region includes non-detergent receiving regions 622d and 622e in which non-detergents, such as fabric softener and bleach, are received. In an embodiment, the non-detergent receiving regions 622d and 622e are divided into a fabric softener receiving region 622d in which fabric softener is received and a bleach receiving region 622e in which bleach is received.

The detergent receiving case 62 is provided with a stopper 622f to limit a withdrawal distance of the detergent receiving case 62. The stopper 622f integrally extends from an upper surface of the partition 622b and is configured to be caught by a front lower end of the water supply guide unit 63 that is installed to cover the top of the detergent housing 61.

The detergent receiving case 62 is completely separable from the detergent housing 61. To this end, slits 622g are formed at opposite sides of the stopper 622f on the partition 622b to define an elastic deformable portion 622h between the slits 622g. The elastic deformable portion 622h may be temporarily elastically deformed upon receiving external force. The elastic deformable portion 622h is provided with a pressure portion 622i to assist the user to easily apply force to the elastic deformable portion 622h. As such, if the user pushes the pressure portion 622i to apply force downward to the elastic deformable portion 622h, the elastic deformable portion 622h is temporarily deformed downward, causing the stopper 622f to be temporarily moved downward. If the detergent receiving case 62 is moved forward in such a state, the detergent receiving case 62 may be completely separated from the detergent housing 61.

The water supply guide unit 63 is installed on the detergent housing 61 by a plurality of hooks 63a provided at an outer edge thereof. The water supply guide unit 63 is provided at a rear end thereof with a water supply port 63f that is connected to the water supply pipe 11. A plurality of water supply paths 63b, 63c and 63d to supply water into the detergent receiving regions 622c, 622d and 622e, respectively, are defined in the water supply guide unit 63. In addition, water supply holes 63e are perforated in the bottom of the water supply guide unit 63 to allow the water guided by the water supply paths 63b, 63c and 63d to be supplied into the detergent receiving regions 622c, 622d and 622e. A cover plate 63g is coupled to the water supply guide unit 63 to close the water supply paths 63b, 63c and 63d.

In the detergent receiving case 62 having the above-described configuration, in a state in which half or more of the detergent receiving case 62 is withdrawn, the center of gravity of the detergent receiving case 62 is shifted forward of the detergent housing 61. In this case, the detergent receiving case 62 is slightly tilted forward by the weight thereof as well as the weight of detergent received therein, whereby a front end of the detergent receiving case 62 sags. In the event that the front end of the detergent receiving case 62 sags, friction between the first rail portions 61b and the second rail portions 622a increases. This may hinder smooth withdrawal of the detergent receiving case 62 for the latter half of the withdrawal operation of the detergent receiving case 62.

Accordingly, to prevent the detergent receiving case 62 from sagging as described above, a support roller 64 is provided at the detergent receiving case 62, to allow a rear end of the detergent receiving case 62 to be supported in a rolling manner by a lower surface of the water supply guide unit 63 located above the detergent receiving case 62. In this case, as the withdrawal distance of the detergent receiving case 62 is determined by the above-described stopper 622f, it may be necessary to position the support roller 64 behind the stopper 622f in order to prevent sagging of the detergent receiving case 62.

In an embodiment, for installation of the support roller 64, a roller mount 622j is indented in the partition 622b of the detergent receiving case 62 so that the support roller 64 is rotatably seated in the roller mount 622j. In such a seated state, an upper end of the support roller 64 protrudes from the roller mount 622j so that the protruding portion of the support roller 64 is supported by the lower surface of the water supply guide unit 63.

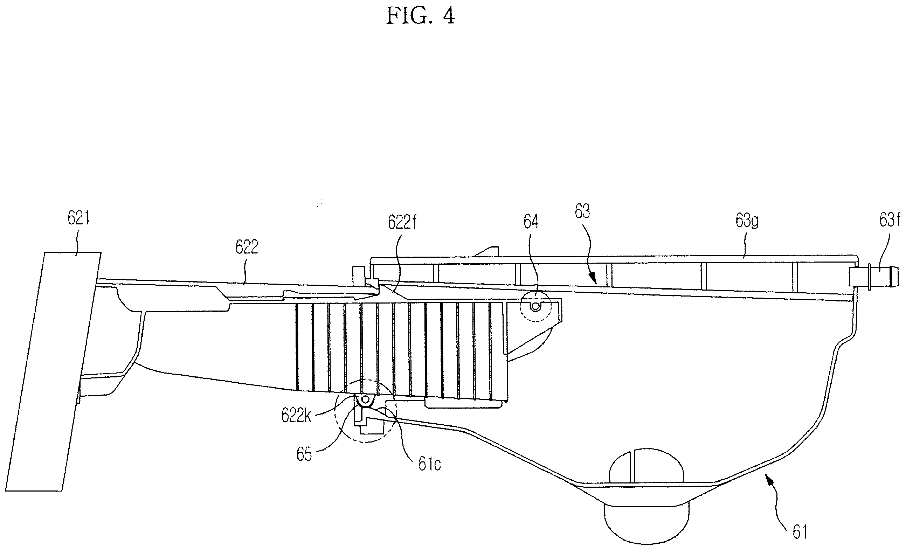

As such, even if the center of gravity of the detergent receiving case 62 is shifted forward of the detergent housing 61 as the detergent receiving case 62 is withdrawn, the rear end of the detergent receiving case 62 is supported by the lower surface of the water supply guide unit 63 via the support roller 64 as illustrated in FIG. 4, whereby the support roller 64 prevents the detergent receiving case 62 from sagging and consequently, friction between the first rail portions 61b and the second rail portions 622a does not increase. Moreover, although load applied to the support roller 64 increases as the detergent receiving case 62 is withdrawn, low friction is present between the support roller 64 and the lower surface of the water supply guide unit 63 because the support roller 64 is supported in a rolling manner by the lower surface of the water supply guide unit 63. This ensures that the detergent receiving case 62 is easily movable so as to be withdrawn from the detergent housing 61.

For the latter half of the withdrawal operation of the detergent receiving case 62, the front end of the detergent receiving case 62 may be raised by force applied by the user. Even in the event that the front end of the detergent receiving case 62 is raised, friction between the first rail portions 61b and the second rail portions 622a increases, which may hinder smooth withdrawal of the detergent receiving case 62 for the latter half of the withdrawal operation of the detergent receiving case 62.

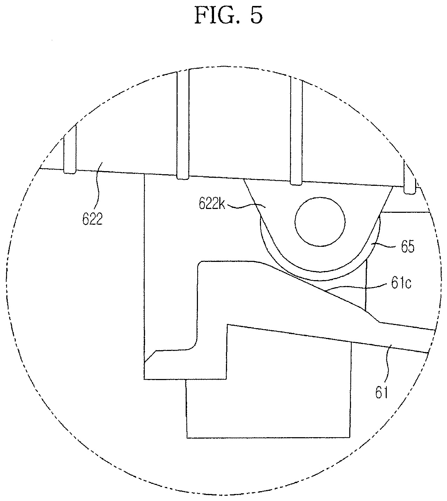

Accordingly, to prevent rising of the detergent receiving case 62 that occurs for the latter half of the withdrawal operation of the detergent receiving case 62, the detergent housing 61 is provided at a front end of an inner bottom surface thereof with a forwardly and upwardly inclined guide 61c, and the detergent receiving case 62 is provided at a lower surface thereof with an auxiliary support member 65 to be supported by the inclined guide 61c as the detergent receiving case 62 is withdrawn. In an embodiment, the auxiliary support member 65 includes an auxiliary support roller 65 rotatably installed to the lower surface of the detergent receiving case 62. The auxiliary support roller 65 is located at a position corresponding to the stopper 622f, so as to be supported by the inclined guide 61c for the latter half of the withdrawal operation of the detergent receiving case 62. That is, the auxiliary support roller 65 is located forward of the support roller 64. In an embodiment, the auxiliary support roller 65, as illustrated in FIG. 5, is rotatably installed to the lower surface of the detergent receiving case 62 via a hinge 622k provided at the lower surface of the detergent receiving case 62.

As such, the moment before the detergent receiving case 62 is completely withdrawn, i.e., the moment before the stopper 622f is caught by the front lower end of the water supply unit 63, the auxiliary support roller 65 begins to move while being supported in contact with the inclined guide 61c, which prevents the front end of the detergent receiving case 62 from being raised by force applied by the user for the latter half of the withdrawal operation.

As described above, the support roller 64 prevents the front end of the detergent receiving case 62 from sagging and the auxiliary support roller 65 prevents the front end of the detergent receiving case 62 from being raised. That is, both the support roller 64 and the auxiliary support roller 65 may reduce vertical movement of the front end of the detergent receiving case 62 that may be caused during withdrawal or insertion of the detergent receiving case 62, whereby the detergent receiving case 62 may be smoothly withdrawn or inserted in under assistance of the first rail portions 61b and the second rail portions 622a.

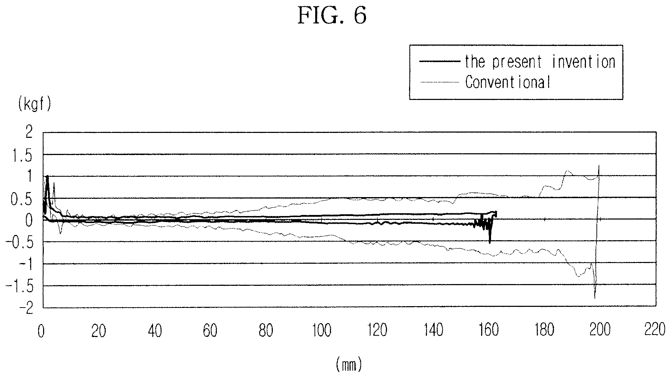

FIG. 6 is a graph comparing force required to move a conventional detergent receiving case with force required to move the detergent receiving case 62 with the support roller 64 and the auxiliary support roller 65 according to an embodiment. As shown in the graph of FIG. 6, the force required to move the detergent receiving case 62 is significantly reduced as compared to the force required to move the conventional detergent receiving case.

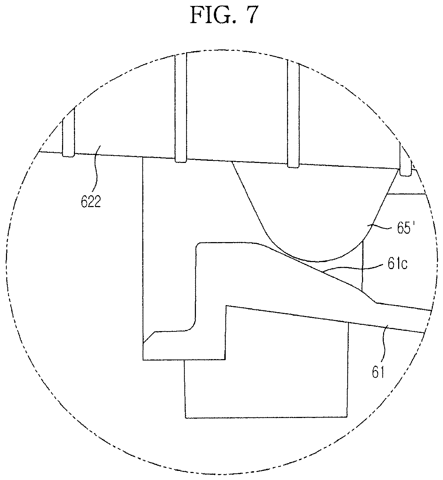

As shown in FIG. 2, an embodiment employs the auxiliary support roller 65 as the auxiliary support member 65, but an embodiment is not limited thereto. As illustrated in FIG. 7, the auxiliary support member may includes an auxiliary support portion 65' integrally extending from the lower surface of the detergent receiving case 62 to allow the lower surface of the detergent receiving case 62 to be supported by the inclined guide 61c. In this case, a lower end of the auxiliary support portion 65' to be supported by the inclined guide 61c may be curved, which is advantageous to reduce friction between the auxiliary support portion 65' and the inclined guide 61c.

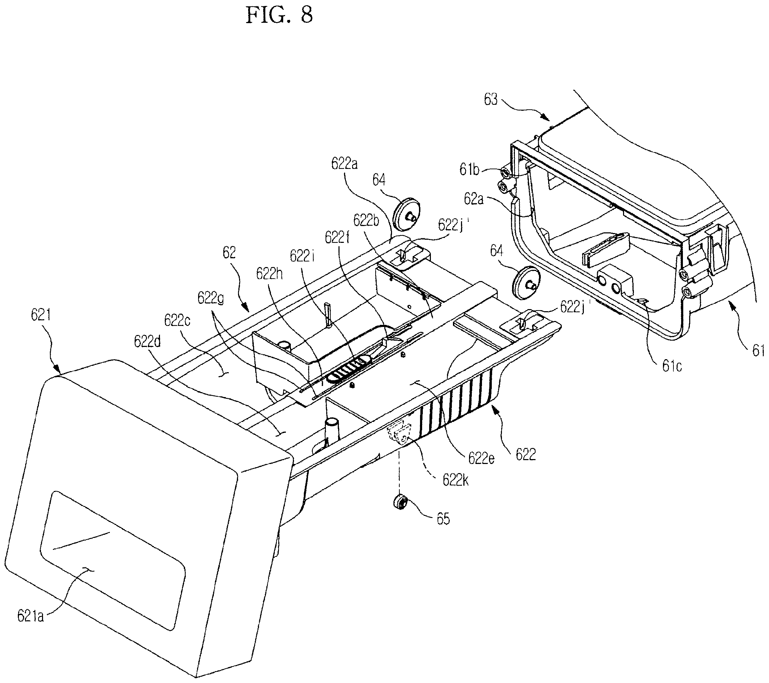

In addition, as shown in FIG. 2, an embodiment employs the single support roller 64 seated in the roller mount 622j of the partition 622b, but an embodiment is not limited thereto. A plurality of support rollers and corresponding roller mounts may be installed. For example, as illustrated in FIG. 8, roller mounts 622j' for installation of the support roller 64 may be provided at opposite lateral positions of the detergent receiving case 62 such that two support rollers 64 are installed in the respective roller mounts 622j'. Providing the two support rollers 64 ensures that opposite sides of a rear portion of the detergent receiving case 62 are evenly supported by the two rollers 64, which may prevent left-and-right movement of the detergent receiving case 62.

As is apparent from the above description, according to embodiments, a detergent receiving case is provided with a support roller and an auxiliary support member, which may prevent the detergent receiving case from being raised or sagging when withdrawn. This ensures stable movement of the detergent receiving case and allows the detergent receiving case to be easily moved even by low force.

Although an embodiment has been shown and described, it would be appreciated by those skilled in the art that changes may be made in embodiments without departing from the principles, the scope of which is defined in the claims.

## Claims

1. A washing machine comprising:
a detergent feeding device (60) to feed detergent,
wherein the detergent feeding device (60) includes a detergent housing (61) having an open front side, a detergent receiving case (62) installed to the detergent housing (61) so as to be movable through the open front side of the detergent housing,
wherein the detergent receiving case (62) includes at least one support roller (64) supported in a rolling manner and an auxiliary support member (65, 65') located forward of the support roller (64), **characterized in that** said detergent feeding device further includes a water supply guide unit (63) placed on top ot the detergent housing (61) to guide water into the detergent receiving case (62) inserted into the detergent housing,
wherein said at least one support roller (64) is supported on a lower surface of the water supply guide unit (63) and the auxiliary support member (65, 65') is supported in contact with the bottom surface of the detergent housing (61) as the detergent receiving case is withdrawn from the detergent housing.

2. The washing machine according to claim 1, wherein the auxiliary support member (65, 65') includes an auxiliary support roller (65) supported in a rolling manner on the bottom surface of the detergent housing (1).

3. The washing machine according to claim 1, wherein the auxiliary support member (65, 65') includes an auxiliary support portion (65') integrally extending from the detergent receiving case (62).

4. The washing machine according to claim 1, wherein the detergent receiving case (62) includes a partition (622b) to divide the interior of the detergent receiving case into left and right regions, and a roller mount (622j) indented in the partition for installation of the support roller (64).

5. The washing machine according to claim 1, wherein the detergent receiving case (62) further includes a stopper (622f) located forward of the support roller (64), the stopper (622f) serving to limit a withdrawal distance of the detergent receiving case.

6. The washing machine according to claim 5, wherein the partition (622j) includes elongated slits (622g) formed in an upper surface thereof at opposite sides of the stopper (622f) to extend in a front-and-rear direction thereof.

7. The washing machine according to claim 1, wherein the detergent housing (61) includes two first rail portions (61b) provided at opposite inner surfaces of the detergent housing, to which the detergent receiving case (62) is movably installed, and
wherein the detergent receiving case (62) includes two second rail portions (622a) provided at opposite outer surfaces thereof so as to be movably installed respective to the first rail portions (61b).

8. The washing machine according to claim 1, wherein the at least one support roller (64) includes two support rollers, and
wherein roller mounts (622j') for installation of the two support rollers are provided at opposite lateral positions of the detergent receiving case (62).

9. The washing machine according to claim 1, wherein the detergent housing (61) includes an inclined guide (61c) extending forwardly and upwardly from an inner bottom surface of the detergent housing (61) so that the auxiliary support member (65, 65') is supported in contact with the inclined guide.

10. The washing machine according to claim 9, wherein a lower end of the auxiliary support member (65, 65') to be supported in contact with the inclined guide (61c) is curved.

## Patentansprüche

1. Waschmaschine, welche aufweist:
eine Waschmittelzufuhreinrichtung (60) zur Zufuhr von Waschmittel,
wobei die Waschmittelzufuhreinrichtung (60) ein Waschmittelgehäuse (61) aufweist, welches eine offene Vorderseite umfasst, ein Waschmittelaufnahmegehäuse (62), welches an dem Waschmittelgehäuse (61) so angeordnet ist, dass es durch die offene Vorderseite des Waschmittelgehäuses bewegbar ist,
wobei das Waschmittelaufnahmegehäuse (62) wenigstens eine Tragrolle (64) aufweist, die drehbar gelagert ist, sowie ein Hilfstragteil (65, 65'), welches vor der Tragrolle (64) angeordnet ist,
**dadurch gekennzeichnet,**
**dass** die Waschmittelzufuhreinrichtung weiterhin eine Wasserzufuhr-Führungseinrichtung (63) aufweist, die oben auf dem Waschmittelgehäuse (61) so platziert ist, dass Wasser in das Waschmittelaufnahmegehäuse (62) geführt wird, welches in dem Waschmittelgehäuse eingesetzt ist, wobei die wenigstens eine Tragrolle (64) auf einer Unterseite der Wasserzufuhr-Führungseinrichtung (63) gelagert ist, und das Hilfstragteil (65, 65') in Kontakt mit der Bodenfläche des Waschmittelgehäuses (61) steht, wenn das Waschmittelaufnahmegehäuse aus dem Waschmittelgehäuse herausgezogen wird.

2. Waschmaschine nach Anspruch 1, wobei das Hilfstragteil (65, 65') wenigstens eine Hilfsstützrolle (65) aufweist, die drehbar auf der Bodenfläche des Waschmittelgehäuses (1) gelagert ist.

3. Waschmaschine nach Anspruch 1, wobei das Hilfstragteil (65, 65') einen Hilfstragbereich (65') aufweist, der sich einteilig von dem Waschmittelaufnahmegehäuse (62) erstreckt.

4. Waschmaschine nach Anspruch 1, wobei das Waschmittelaufnahmegehäuse (62) eine Teilung (622b) aufweist, die das Innere des Waschmittelaufnahmegehäuses in einen linken und einen rechten Bereich unterteilt, und eine Rollenhalterung (622j) aufweist, die in der Teilung zur Installation der Tragrolle (64) eingekerbt ist.

5. Waschmaschine nach Anspruch 1, wobei das Waschmittelaufnahmegehäuse (62) weiterhin einen Stopper (622f) aufweist, der vor der Tragrolle (64) angeordnet ist, wobei der Stopper (622f) zur Begrenzung einer Herausziehentfernung des Waschmittelaufnahmegehäuses dient.

6. Waschmaschine nach Anspruch 5, wobei die Teilung (622j) einen Längsschlitz (622g) aufweist, der in einer oberen Fläche auf gegenüberliegenden Seiten des Stoppers (622f) gebildet ist, um sich in einer Richtung von vorne nach hinten zu erstrecken.

7. Waschmaschine nach Anspruch 1, wobei das Waschmittelgehäuse (61) zwei erste Schienenabschnitte (61b) aufweist, die auf gegenüberliegenden inneren Flächen des Waschmittelgehäuses vorgesehen sind, an welchen das Waschmittelaufnahmegehäuse (62) bewegbar installiert ist, und
wobei das Waschmittelaufnahmegehäuse (62) zwei zweite Schienenabschnitte (622a) aufweist, die an gegenüberliegenden äußeren Flächen so angeordnet sind, dass sie beweglich bezüglich der ersten Schienenabschnitte (61b) installiert sind.

8. Waschmaschine nach Anspruch 1, wobei die wenigstens eine Tragrolle (64) zwei Tragrollen umfasst und wobei Rollenhalterungen (622j') zum Anordnen der beiden Tragrollen auf gegenüberliegenden seitlichen Positionen des Waschmittelaufnahmegehäuses (62) vorgesehen sind.

9. Waschmaschine nach Anspruch 1, wobei das Waschmittelgehäuse (61) eine geneigte Führung (61c) aufweist, die sich nach vorne und nach oben von einer inneren Bodenfläche des Waschmittelgehäuses (61) so erstreckt, dass das Hilfstragteil (65, 65') durch Kontakt mit der geneigten Führung abgestützt ist.

10. Waschmaschine nach Anspruch 9, wobei ein unteres Ende des Hilfstragteils (65, 65') zur Abstützung in Kontakt mit der geneigten Führung (61c) gekrümmt ist.

## Revendications

1. Machine à laver comprenant :
un dispositif de délivrance de détergent (60) destiné à délivrer un détergent,
dans laquelle le dispositif de délivrance de détergent (60) inclut un logement de détergent (61) comportant un côté avant ouvert, un boîtier de réception de détergent (62) installé sur le logement de détergent (61) de sorte à pouvoir être déplacé au travers du côté avant ouvert du logement de détergent,
dans laquelle le boîtier de réception de détergent (62) inclut au moins un galet de support (64) supporté tout en pouvant tourner et un élément de support auxiliaire (65, 65') situé en avant du galet de support (64), **caractérisé en ce que** ledit dispositif de délivrance de détergent inclut en outre une unité de guidage d'alimentation en eau (63) placée au sommet du logement de détergent (61) afin de guider l'eau dans le boîtier de réception de détergent (62) inséré dans le logement de détergent, ledit ou lesdits galets de support (64) étant supportés sur la surface inférieure de l'unité de guidage d'alimentation en eau (63) et l'élément de support auxiliaire (65, 65') étant supporté en contact avec la surface de fond du logement de détergent (61) lorsque le boîtier de réception de détergent est retiré du logement de détergent.

2. Machine à laver selon la revendication 1, dans laquelle l'élément de support auxiliaire (65, 65') inclut un galet de support auxiliaire (65) supporté tout en pouvant tourner sur la surface de fond du logement de détergent (61).

3. Machine à laver selon la revendication 1, dans laquelle l'élément de support auxiliaire (65, 65') inclut un organe de support auxiliaire (65') s'étendant en une seule pièce depuis le boîtier de réception de détergent (62) .

4. Machine à laver selon la revendication 1, dans laquelle le boîtier de réception de détergent (62) inclut une séparation (622b) destinée à diviser l'intérieur du boîtier de réception de détergent en des zones gauche et droite, ainsi qu'un dispositif de montage de galet (622j) en retrait dans la séparation, en vue de l'installation du galet de support (64).

5. Machine à laver selon la revendication 1, dans laquelle le boîtier de réception de détergent (62) inclut en outre une butée (622f) située en avant du galet de support (64), la butée (622f) servant à limiter la distance de retrait du boîtier de réception de détergent.

6. Machine à laver selon la revendication 5, dans laquelle la séparation (622b) inclut des fentes allongées (622g) formées dans la surface supérieure de celle-ci à des côtés opposés de la butée (622f) afin de s'étendre dans sa direction avant arrière.

7. Machine à laver selon la revendication 1, dans laquelle le logement de détergent (61) inclut deux premiers organes formant rails (61b) prévus au niveau des surfaces internes opposées du logement de détergent sur lequel est installé en étant mobile le boîtier de réception de détergent (62), et
dans laquelle le boîtier de réception de détergent (62) inclut deux seconds organes formant rails (622a) prévus au niveau des surfaces externes opposées de celui-ci de sorte à être installés tout en pouvant se déplacer par rapport aux premiers organes formant rails (61b).

8. Machine à laver selon la revendication 1, dans laquelle le ou les galets de support (64) incluent deux galets de support, et
dans lequel des dispositifs de montage de galets (622j') destinés à l'installation des deux galets de support sont prévus à des positions latérales opposées du boîtier de réception de détergent (62).

9. Machine à laver selon la revendication 1, dans laquelle le logement de détergent (61) inclut un guide incliné (61c) s'étendant vers l'avant et vers le haut depuis une surface interne de fond du logement de détergent (61) de sorte à ce que l'élément de support auxiliaire (65, 65') soit supporté en contact avec le guide incliné.

10. Machine à laver selon la revendication 9, dans laquelle une extrémité inférieure de l'élément de support auxiliaire (65, 65') devant être supportée en contact avec le guide incliné (61c) est incurvée.
